# FASCICULE DE BREVET EUROPEEN

(11) **EP 2 175 752 B1**
(45) Date de publication et mention de la délivrance du brevet: **13.04.2011**
(21) Numéro de dépôt: 08827868.4
(22) Date de dépôt: 04.07.2008
(51) Int. Cl.: A41D 19/00, A61B 19/04, B29C 41/14, C08L 1/00, C08L 7/02, C08L 9/04, C08L 9/08, C08L 21/02, C08L 29/04, C08L 33/02, C08L 75/04

(54) **COMPOSITION POUR LA FABRICATION D'UN FILM ÉLASTIQUE IMPER-RESPIRANT**
ZUSAMMENSETZUNG ZUR HERSTELLUNG EINES ATMUNGSFÄHIGEN UND WASSERDICHTEN ELASTISCHEN FILMS
COMPOSITION FOR THE PRODUCTION OF A BREATHABLE-WATERPROOF ELASTIC FILM

(30) Priorité: 05.07.2007 FR 0704855
(43) Date de publication de la demande: 21.04.2010
(73) Titulaire: Hutchinson, 75008 Paris (FR)
(72) Inventeur: DIEUDONNÉ, Marie, 45120 Chalette sur Loing (FR); DEFFRENNE, Béatrice, F-60870 Villiers Saint Paul (FR); SONNTAG, Philippe, F-77850 Hericy (FR)
(74) Mandataire: Corizzi, Valérie
(86) Numéro de dépôt international: PCT/FR2008/000962
(87) Numéro de publication internationale: WO 2009/024679

(56) Documents cités:
- EP-A- 0 574 160
- EP-A- 0 712 618
- EP-A- 0 921 133
- GB-A- 1 011 561
- JP-A- 2000 303 225
- US-A- 5 985 955
- US-A1- 2004 231 027
- US-A1- 2005 031 884
- US-B1- 6 183 907

## Description

La présente invention a pour objet de nouveaux articles, en particulier des films, à base de polymères, qui sont à la fois élastiques, imperméables à l'eau et perméables à la vapeur d'eau. L'invention a également pour objet un procédé pour leur préparation et leurs utilisations.

Pour différentes applications, telles que les vêtements de sport, les gants en caoutchouc, mais aussi les membranes de piles à combustible, les membranes d'ultrafiltration, on a besoin de films qui soient imperméables à l'eau à l'état liquide, mais qui soient perméables à la vapeur d'eau, notamment dans le cas d'articles vestimentaires, pour éviter l'accumulation de vapeur d'eau résultant de la transpiration. Les articles qui possèdent cette double propriété sont dits imper-respirants.

Deux procédés existent actuellement pour fabriquer des films imper-respirants : l'enduction et le laminage d'une membrane sur un tissu.

L'enduction consiste à appliquer un enduit directement sur le tissu, qui obstrue les espaces entre les fils du tissage pour rendre le tissu imperméable. Pour préserver la respirabilité, il faut rendre l'enduction microporeuse. Pour cela, on applique une pâte qui, après « cuisson », laisse apparaître des micropores par évaporation du solvant. La majorité des enductions microporeuses sont à base de polyuréthanes. Des exemples de tels films sont illustrés dans US-4,774,131 ; US-5,169,906 ; US-5,204,403 et US-5,461,122.

En ce qui concerne les membranes imper-respirantes, aujourd'hui la totalité d'entre elles sont supportées, principalement sur un matériau textile. Cela notamment à cause des faibles propriétés mécaniques des membranes imper-respirantes connues. En effet, elles doivent être fines (5 à 50 microns) pour conserver de bonnes propriétés de respirabilité. Ces membranes imper-respirantes peuvent être fabriquées par différents procédés qui sont décrits dans US-4,833,026, US-5,908,690 et EP-0 591 782.

Le laminage d'une membrane imper-respirante se fait par contre-collage de la membrane sur une face du tissu. Il existe deux types de membranes imper-respirantes : hydrophile ou microporeuse. Une membrane microporeuse est constituée de micropores permettant le passage de la vapeur d'eau mais bloquant les gouttes d'eau. L'évacuation de l'humidité (transpiration) se fait par action physique. Tandis que dans les membranes hydrophiles, le transfert d'humidité se fait par un phénomène chimique. La membrane absorbe la vapeur d'eau et la rejette vers l'extérieur. Il faut dans ce cas amorcer la pompe : la membrane doit tout d'abord se gorger d'eau pour fonctionner. Dans les deux cas, c'est la différence de pression qui active l'évacuation de l'humidité. Un film microporeux a tendance à évacuer la vapeur d'eau plus vite mais ne transfère plus l'eau sous forme liquide.

Si les films de l'art antérieur ont des propriétés d'imperméabilité à l'eau et de perméabilité à la vapeur intéressantes, ils ont généralement deux défauts majeurs : de mauvaises propriétés mécaniques, et notamment une faible résistance à l'abrasion, et une faible élasticité.

Il persistait donc le besoin de films imperméables à l'eau (lorsqu'elle est à l'état liquide), perméables à la vapeur d'eau, qui soient autosupportés, dotés de bonnes propriétés mécaniques, et notamment d'une bonne résistance à l'abrasion, d'une résistance élevée à l'usure et qui aient de très bonnes propriétés élastiques. Enfin, on a cherché à mettre au point des films imper-respirants dont le coût soit suffisamment peu élevé pour permettre leur utilisation dans un large éventail d'applications.

Le but de l'invention était d'atteindre ces objectifs. Cela a été possible grâce à la mise au point d'une composition particulière qui est ensuite mise en oeuvre dans un procédé classique d'application sur un moule, ou forme.

Les articles de l'invention sont obtenus par application sur un moule d'au moins une couche d'une composition comprenant :
(i) une dispersion dans un solvant aqueux d'au moins un élastomère ;
(ii) de 15 à 100 % en poids par rapport au poids de l'élastomère d'au moins un composé hydrophile choisi parmi : la cellulose et les dérivés de la cellulose;
(iii) de 2 à 50 % en poids par rapport au poids du composé hydrophile d'au moins un agent réticulant du composé hydrophile ;
(iv) éventuellement un catalyseur,
suivie d'un séchage.

Cette composition constitue un premier objet de l'invention.

La dispersion (également appelée latex) d'élastomère utilisée dans le procédé ci-dessus est constituée d'au moins un polymère de caoutchouc ou élastomère, qui peut être réticulable et qui peut éventuellement être déjà partiellement réticulé. Le système de réticulation peut être un système de vulcanisation au soufre ou bien un système de réticulation à base d'un peroxyde et éventuellement de soufre, ou bien la composition peut être à base d'un élastomère comportant des groupes thermo-réticulables ou encore d'un élastomère thermoplastique déjà réticulé, tel qu'un TPE (élastomère thermoplastique). En présence de groupements carboxyliques sur l'élastomère, on peut utiliser des coagents réticulants qui peuvent être des ions divalents (ex : Zn²⁺).

Le polymère de caoutchouc, également nommé élastomère, peut être tout caoutchouc naturel ou élastomère de synthèse. Il est de préférence choisi dans le groupe constitué par les caoutchoucs naturels, les polyisoprènes de synthèse, les copolymères butadiène/ acrylonitrile, les terpolymères butadiène/ acrylonitrile/ acide méthacrylique, les polychloroprènes, les copolymères isoprène/ isobutylène, les copolymères styrène/butadiène carboxylés ou non, les polyuréthanes, les copolymères éthylène/ acétate de vinyle, les acryliques, les élastomères fluorés et les élastomères thermoplastiques, tels que les copolymères à blocs styréniques, les élastomères thermoplastiques dérivés des polyoléfines ou les polyuréthanes thermoplastiques.

Le composé hydrophile est choisi parmi la cellulose et les dérivés de la cellulose, qu'ils soient hydrosolubles ou non. Selon ce mode de réalisation, le composé hydrophile est avantageusement choisi parmi les éthers et les esters de cellulose, en particulier : la carboxyméthyl cellulose (Na-CMC), la carboxyméthylhydroxyéthyl cellulose (Na-CMHEC), l'hydroxyéthyl cellulose (HEC), l'hydroxypropylcellulose (HPC), la méthylcellulose (MC), la méthylhydroxyéthyl cellulose (MHEC), la méthylhydroxypropyl cellulose (MHPC). Il peut également être choisi parmi les fibres, ou duvet ou peluche de cellulose, comme les fibres de bois obtenues par défibrage à sec de pâte de bois (également appelées fluff).

De préférence le composé hydrophile est choisi parmi : la carboxyméthyl cellulose et l'hydroxyéthyl cellulose.

La composition peut en outre comprendre un ou plusieurs composés hydrophiles tels que :
- l'alcool polyvinylique,
- les polyuréthanes hydrophiles aqueux qui sont des suspensions de polyuréthane hydrophile, également appelés polyuréthane autoassociatif cationique. Ces composés sont constitués d'unités polyéthylène glycol reliées par des groupements uréthane et sont dotés de groupes terminaux hydrophobes,
- les superabsorbants qui sont généralement des polymères ou des copolymères comportant des groupements acrylique ou polyacrylique.

Parmi les superabsorbants utilisables dans l'invention, on peut citer les polymères et les copolymères à base d'acrylate, comme les acrylates de sodium. Ils peuvent être sous forme de fibres ou de poudres. On peut également citer les superabsorbants d'origine naturelle comme les fibres commercialisées sous la marque Lysorb ®.

Le réticulant du composé hydrophile est choisi parmi les réticulants habituels de la cellulose et des dérivés cellulosiques tels que : le diméthyloldihydroxyéthylène urée (DMDHEU), le N-méthylolacrylamide (NMA), les résines mélamine-formol, les résines urée-formol, les résines polyamide épichlorhydrine (PAE), les acides polycarboxyliques, comme l'acide citrique, l'acide polymaléique, l'acide polyacrylique, l'acide 1,2,3,4-butane tétracarboxylique, l'acide polyacrylique, l'acide 1,2,3-propane tricarboxylique, un polymère d'acide polycarboxylique comme les polymères de l'acide acrylique, les polymères de l'acide maléique.

Lorsqu'un catalyseur est présent dans la composition, il est choisi en fonction de l'agent réticulant de façon bien connue de l'homme du métier. Parmi les catalyseurs utilisables dans la présente invention, on peut citer : les sels de métal alcalin des acides phosphoreux, tels que les hypophosphites, les phosphites, les polyphosphonates et les phosphates de métal alcalin. On peut également citer les sulfonates de métal alcalin. Dans le cas où l'on utilise une résine urée-formol ou mélamine-formol comme réticulant, un catalyseur préféré est NH₄Cl. Avantageusement, le catalyseur est présent en quantité de 2 à 20% en poids par rapport au poids d'agent réticulant.

Selon une variante de l'invention, la composition est préparée en deux étapes :

Le composé hydrophile et son agent réticulant sont tout d'abord mélangés, éventuellement en présence d'un catalyseur, de façon à obtenir une pré-réticulation partielle ou totale du composé hydrophile.

Ensuite ce composé hydrophile partiellement ou complètement pré-réticulé est mélangé avec l'élastomère.

Une telle composition, comprenant :
(i) une dispersion dans un solvant aqueux d'au moins un élastomère ;
(ii) de 15 à 150 % en poids par rapport au poids de l'élastomère d'au moins un composé hydrophile, partiellement ou complètement pré-réticulé, choisi parmi : la cellulose et les dérivés de la cellulose,
constitue un autre objet de l'invention.

Et l'invention présente encore une autre variante se fondant sur une préparation de la composition également en deux étapes comme expliqué ci-dessus :

Une telle composition, comprenant :
(i) une solution d'au moins un élastomère dans un solvant organique,
(ii) de 15 à 150 % en poids par rapport au poids de l'élastomère d'au moins un composé hydrophile, partiellement ou complètement pré-réticulé, choisi parmi : la cellulose et les dérivés de la cellulose,
constitue un autre objet de l'invention. Les élastomères utilisables selon cette variante sont choisis dans la liste déjà développée ci-dessus.

Le solvant organique est avantageusement choisi parmi : le diméthylformamide (DMF), le N,N-diméthylacétamide (DMAC), la N-méthylpyrrolidone (NMP), le tétrahydrofurane (THF), les solvants aliphatiques tels que le n-pentane, le n-hexane, le n-heptane, les solvants aromatiques comme le toluène, les solvants cycloaliphatiques comme le cyclohexane, ainsi que leurs mélanges.

Selon cette dernière variante, le composé hydrophile est pré-dispersé dans un solvant choisi parmi ceux énumérés ci-dessus.

Avantageusement, la quantité de composé hydrophile en poids par rapport au poids d'élastomère est comprise entre 15 et 50%, plus avantageusement encore entre 15 et 40 %.

Avantageusement, la quantité de réticulant du composé hydrophile en poids par rapport au poids de composé hydrophile est comprise entre 2 et 50%, plus avantageusement encore entre 3 et 20 %.

Dans la composition de l'invention, la teneur en matière sèche est comprise entre 15 et 75% en poids, avantageusement entre 20 et 40 % en poids.

De préférence, la composition de l'invention comprend :
(i) une dispersion dans un solvant aqueux d'au moins un élastomère ;
(ii) de 15 à 40 % en poids par rapport au poids de polymère d'au moins un composé hydrophile ;
(iii) de 5 à 20 % en poids par rapport au poids de composé hydrophile d'au moins un agent réticulant du composé hydrophile,
(iv) de 5 à 10% en poids par rapport au poids de l'agent réticulant d'au moins un catalyseur,
et elle possède un taux de matière sèche compris entre 20 et 40% en poids par rapport au poids total de la composition, étant entendu que le composé hydrophile peut être présent sous forme partiellement ou complètement pré-réticulée.

La composition selon l'invention peut comporter également tout ou partie des additifs habituellement utilisés dans la fabrication d'articles à base de caoutchouc, tels que, par exemple, des agents anti-vieillissement, des antioxydants, des pigments ou des épaississants.

L'invention a encore pour objet un procédé de fabrication d'un article par application sur un moule d'au moins une couche de la composition de l'invention, suivie d'un séchage.

Le moule peut être constitué de tout support d'application de la composition, il est adapté en fonction de la forme du film que l'on souhaite fabriquer : il peut par exemple s'agir d'un moule en forme de main pour fabriquer un gant, ou sous forme de plaque pour fabriquer une feuille ou une membrane.

L'application de la composition sur le moule peut être faite par tout moyen connu de l'homme du métier tel que : trempage, enduction, pulvérisation.

De préférence, l'application de la composition sur le moule est faite par trempage pour la fabrication de gants, ou par enduction pour la fabrication de films.

Selon le procédé de l'invention on peut appliquer une ou plusieurs couches de la composition décrite ci-dessus, chaque couche étant identique ou différente des autres couches, avec une étape de séchage entre deux applications.

Après application de la composition en quantité appropriée sur le moule, le séchage est fait dans les conditions suivantes : à une température comprise entre la température ambiante (environ 20°C en zone tempérée) et 100°C, à l'air libre, en étuve, au micro-ondes, par traitement infra-rouge.

Selon l'invention, on peut prévoir une étape de réticulation après l'application de la dernière couche. De façon connue, la réticulation est faite dans les conditions suivantes : par chauffage à une température adaptée en fonction de l'élastomère et du réticulant, d'une façon générale à une température comprise entre 100 et 170°C, par exemple par chauffage à l'air chaud, dans une étuve. Mais on peut aussi prévoir de réticuler la composition par trempage dans un bain de sel fondu.

Selon l'invention, on peut prévoir une étape de lavage de l'article après réticulation, de façon à retirer les produits, tels que les agents de mise en oeuvre, présents dans le latex et susceptibles d'être allergisants. De façon connue, ce lavage se fait par trempage dans un bain aqueux à une température comprise entre 20 et 60°C.

Selon une variante de l'invention on peut prévoir que le moule soit préalablement revêtu d'un film choisi parmi : un textile, un non-tissé, une membrane imper-respirante, et que l'on applique la composition de l'invention sur ce film.

Selon une autre variante de l'invention, on peut prévoir, après l'application d'une ou plusieurs couches de la composition de l'invention sur le moule, d'appliquer un film choisi parmi : un textile, un non-tissé, une membrane imper-respirante, sur la composition.

Un non-tissé est une feuille manufacturée, constituée d'un voile ou d'une nappe de fibres orientées directionnellement ou au hasard, liées par friction et/ou cohésion et/ou adhésion (norme ISO9092 de 1998).

Parmi les textiles, on inclut les tissus et les tricots.

De préférence, lorsque l'on utilise un textile, un non-tissé ou une membrane pour la réalisation de l'article de l'invention, on choisit celui-ci parmi les textiles, les non-tissés, et les membranes ayant de bonnes propriétés d'élasticité de façon à obtenir un article d'une élasticité satisfaisante.

On peut également, selon l'invention prévoir l'application sur le moule d'une couche de coagulant comme un sel métallique, en particulier le nitrate de calcium, ou entre deux couches de la composition de l'invention, ou après l'application de la dernière couche.

Après le séchage final et éventuellement la réticulation, l'article est retiré du moule.

Le procédé de l'invention peut être facilement mis en oeuvre, suivant différentes techniques connues de l'homme du métier :

### Le trempé simple :

C'est le procédé le plus simple pour obtenir des dépôts minces (couches de 10 µm après séchage). On plonge une forme dans un bain contenant la composition de l'invention. On retire la forme sur laquelle s'est déposé le film. On sèche ce dépôt et si l'épaisseur déposée n'est pas suffisante, on recommence l'opération jusqu'à obtention de l'épaisseur désirée. On vulcanise ensuite l'objet sur la forme.

### Le trempé coagulant :

C'est la technique la plus couramment employée. On trempe la forme dans un bain de coagulant et ensuite dans la composition de l'invention. De cette façon, en un seul trempé, on obtient un dépôt plus épais (100 à 200 µm après séchage). L'agent coagulant est le plus souvent un sel métallique divalent. Il neutralise la couche ionisée protectrice des particules de polymère et provoque la coagulation du latex.

### Le trempé thermosensible :

C'est la technique pour réaliser des pièces à paroi épaisse. On utilise un bain de la composition de l'invention contenant un agent thermosensible. Une forme chaude trempée dans le bain thermosensible permet en un seul trempé d'obtenir l'épaisseur de dépôt souhaitée. Après l'opération de trempage, le film est généralement séché, lavé et réticulé. Le film retiré de la forme donne un objet qui est la copie fidèle de la forme.

### L'enduction :

L'enduction consiste à enduire une surface sensiblement plane (un textile en particulier). L'enduit est transformé en film par traitement thermique. L'enduit peut être un liquide ou une pâte. L'outillage favori est un cylindre (de transfert) ou une racle (couteau) qui balaye de façon tangentielle la surface afin d'appliquer une quantité définie d'enduit. Dans ce cas, l'enduction est directe.

Elle peut être qualifiée d'enduction « transfert » au cas où l'enduit est appliqué préalablement sur un autre support ; ensuite la surface enduite est contre-collée sur le matériau définitif. Cette technique est plus particulièrement utile lorsque le support définitif est fragile.

### La pulvérisation :

La pulvérisation permet de déposer des produits sans contact avec le support, à l'aide d'un pulvérisateur fonctionnant grâce à un gaz sous pression, ou par actionnement mécanique.

L'invention a encore pour objet un article résultant de l'application sur un moule d'au moins une couche d'une composition telle que décrite ci-dessus, suivie d'un séchage.

Eventuellement cet article comporte plusieurs couches d'une ou plusieurs compositions selon l'invention.

Eventuellement cet article comporte au moins une couche d'un textile ou d'un non-tissé, ou d'une membrane imper-respirante.

De façon avantageuse, cet article comporte un film imper-respirant obtenu selon le procédé de l'invention d'une épaisseur comprise entre 10 et 200µm, avantageusement de 15 à 150µm.

Les articles, et notamment les gants de l'invention, ont l'avantage d'être imperméables à l'eau, perméables à la vapeur d'eau, d'être élastiques et d'être dotés d'une bonne résistance mécanique. En outre, ils sont imperméables aux solutions aqueuses de tensio-actifs, que ceux-ci soient cationiques, anioniques ou non-ioniques.

Par élasticité, on entend la propriété d'être déformable sous l'effet d'une contrainte mécanique et de reprendre sa forme initiale lorsque cette contrainte mécanique cesse.

Les articles obtenus par le procédé de l'invention présentent avantageusement au moins l'une, et de préférence plusieurs, des caractéristiques suivantes :
- perméabilité à la vapeur mesurée suivant la norme ASTM E96 méthode B : supérieure ou égale à 300 g/m²/24h,
- résistance à la pénétration de l'eau mesurée suivant la norme ISO 811 supérieure ou égale à 8000Pa,
- contrainte-déformation en traction (norme ISO 37)
   - allongement à la rupture : supérieure ou égale à 200%,
- déformation rémanente après allongement de 100%, mesurée suivant la norme ISO 2285, inférieure ou égale à 5%,
- résistance à la pénétration de l'eau (mesurée suivant la norme ISO 811) après pré-traitement par un test d'abrasion (suivant la norme EN530 Méthode 2) supérieure ou égale à 8000Pa. Le test d'abrasion est réalisé avec un abrasif de grain 240 en appliquant 100 cycles et une pression sur l'éprouvette de 9+0,2kPa.

### EXEMPLES

### Exemple 1 :

### - Composition

| | Parts en poids sec | Concentration des dispersions (%) |
|---|---|---|
| Latex de NBR carboxylé (***) | 100 | 48 |
| Hydroxyde de potassium | 0.5 | 5.0 |
| Oxyde de zinc | 1.5 | 53.4 |
| soufre | 0.85 | 50.4 |
| ZMBT (****) | 0.3 | 49.0 |
| Hydroxyéthylcellulose (*) | 20 | 10 |
| Résine mélamine-formol (**) | 2 | 63 |
| NH₄Cl | 0.2 | 30 |

| | | |
|---|---|---|
| (*) Commercialisé par la société HERCULES sous la référence NATROSOL 250LR (**) Commercialisé par la société SYNTHRON sous la référence PROXM3M (***) NBR = caoutchouc butadiène acrylonitrile (****) ZMBT = 2-mercapto benzothiazole de zinc. Teneur en matière sèche de la composition = 29% | | |

### - Etapes du procédé

On réalise un film par trempage d'une forme dans la composition décrite ci-dessus. Le trempage est effectué une seule fois. Puis le film est séché par chauffage à 50°C puis vulcanisé à 170°C. On obtient une membrane ayant une épaisseur de 60 microns.

Le film obtenu a les propriétés suivantes :

### - Propriétés

- perméabilité à la vapeur d'eau mesurée suivant ASTM E96 méthode B = 500g/m²/24h
- Allongement à la rupture = 500%
- Déformation rémanente après allongement de 100% mesurée suivant ISO 2285 ≤ 1%
- Déformation rémanente après allongement de 300% ≤ 10%.

### Exemple 2 :

### - Composition

| | Parts en poids sec | Concentration des solutions |
|---|---|---|
| Latex de SBR auto-réticulant (***) | 100 | 48.0 |
| Hydroxyethylcellulose (*) | 20 | 10 |
| Résine mélamine-formol (**) | 2 | 63 |
| NH₄Cl | 0.2 | 30 |

| | | |
|---|---|---|
| (*) Commercialisé par la société HERCULES sous la référence NATROSOL ® 250LR (**) Commercialisé par la société SYNTHRON sous la référence PROXM3M (***) SBR = caoutchouc styrène butadiène Teneur en matière sèche = 29.8% | | |

### - Etapes du procédé

On réalise un film par trempage d'une forme dans la composition décrite ci-dessus. Le trempage est effectué une seule fois. Puis le film est séché par chauffage à 50°C puis réticulé à 170°C. On obtient une membrane ayant une épaisseur de 60 microns.

### - Propriétés

Le film obtenu a les propriétés suivantes :
- perméabilité à la vapeur d'eau mesurée suivant ASTM E96 méthode B = 550g/m²/24h.

### Exemple 3 :

### -Composition

| | Parts en poids sec | Concentration des dispersions (%) |
|---|---|---|
| Latex acrylique (Plextol ® DV245 Polymer Latex) | 100 | 55 |
| Hydroxyéthylcellulose (Natrosol ® 250 LR) | 20 | 10 |
| homopolymère d'anhydride maléique (Betclène ® 200) | 2 | 50 |
| acide citrique | 0.2 | 15 |

### - Etapes du procédé

On ajuste le pH à 2 avec de l'acide chlorhydrique, on réalise un film par trempage d'une forme dans la composition décrite ci-dessus. Le trempage est effectué une seule fois. Puis le film est séché par chauffage à 50°C puis vulcanisé à 170°C. On obtient une membrane ayant une épaisseur de 60 microns. Le film obtenu a les propriétés suivantes :

### - Propriétés

Perméabilité à la vapeur d'eau mesurée suivant ASTM E96 méthode B = 550g/m²/24h.

## Revendications

1. Composition comprenant :
(i) une dispersion dans un solvant aqueux d'au moins un élastomère ;
(ii) de 15 à 100 % en poids par rapport au poids de l'élastomère d'au moins un composé hydrophile choisi parmi : la cellulose et les dérivés de la cellulose;
(iii) de 2 à 50 % en poids par rapport au poids du composé hydrophile d'au moins un agent réticulant du composé hydrophile ;
(iv) éventuellement un catalyseur.

2. Composition, comprenant :
(i) une dispersion dans un solvant aqueux d'au moins un élastomère ;
(ii) de 15 à 150 % en poids par rapport au poids de l'élastomère d'au moins un composé hydrophile, partiellement ou complètement pré-réticulé, choisi parmi : la cellulose et les dérivés de la cellulose.

3. Composition, comprenant :
(i) une solution d'au moins un élastomère dans un solvant organique,
(ii) de 15 à 150 % en poids par rapport au poids de l'élastomère d'au moins un composé hydrophile, partiellement ou complètement pré-réticulé, choisi parmi : la cellulose et les dérivés de la cellulose,

4. Composition selon l'une quelconque des revendications 1 à 3, **caractérisée en ce que** l'élastomère est choisi parmi : les caoutchoucs naturels, les polyisoprènes de synthèse, les copolymères butadiène/ acrylonitrile, les terpolymères butadiène/ acrylonitrile/ acide méthacrylique, les polychloroprènes, les copolymères isoprène/ isobutylène, les copolymères styrène/ butadiène carboxylés ou non, les polyuréthanes, les copolymères éthylène/ acétate de vinyle, les acryliques, les élastomères fluorés et les élastomères thermoplastiques, tels que les copolymères à blocs styréniques, les élastomères thermoplastiques dérivés des polyoléfines ou les polyuréthanes thermoplastiques.

5. Composition selon l'une quelconque des revendications précédentes, **caractérisée en ce que** le composé hydrophile est choisi parmi : les éthers et les esters de cellulose, les fibres, ou duvet ou peluche de cellulose.

6. Composition selon l'une quelconque des revendications précédentes, **caractérisée en ce que** le composé hydrophile est choisi parmi : la carboxyméthyl cellulose (Na-CMC), la carboxyméthylhydroxyéthyl cellulose (Na-CMHEC), l'hydroxyéthyl cellulose (HEC), l'hydroxypropylcellulose (HPC), la méthylcellulose (MC), la méthylhydroxyéthyl cellulose (MHEC), la méthylhydroxypropyl cellulose (MHPC).

7. Composition selon l'une quelconque des revendications précédentes, **caractérisée en ce que** le réticulant du composé hydrophile est choisi parmi : le diméthyloldihydroxyéthylène urée (DMDHEU), le N-méthylolacrylamide (NMA), les résines mélamine-formol, les résines urée-formol, les résines polyamide épichlorhydrine (PAE), les acides polycarboxyliques, comme l'acide citrique, l'acide polymaléique, l'acide polyacrylique, l'acide 1,2,3,4-butane tétracarboxylique, l'acide 1,2,3-propane tricarboxylique, un polymère d'acide carboxylique comme les polymères de l'acide acrylique, les polymères de l'acide maléique.

8. Composition selon l'une quelconque des revendications précédentes, **caractérisée en ce que** la quantité de réticulant du composé hydrophile en poids par rapport au poids de composé hydrophile est comprise entre 3 et 20%, la quantité de composé hydrophile en poids par rapport au poids d'élastomère est comprise entre 15 et 50%, avantageusement encore entre 15 et 40 %, et la teneur en matière sèche de la composition est comprise entre 15 et 75 % en poids.

9. Procédé de fabrication d'un article **caractérisé en ce qu'**il comporte au moins l'application sur un moule d'au moins une couche d'une composition selon l'une quelconque des revendications 1 à 8, suivie d'un séchage.

10. Procédé de fabrication d'un article selon la revendication 9, **caractérisé en ce que** le moule a la forme d'une main et l'article est un gant.

11. Procédé de fabrication d'un article selon l'une quelconque des revendications 9 à 10 précédentes, **caractérisé en ce que**, préalablement à l'application de la composition, le moule est revêtu d'un film choisi parmi : un textile, un non-tissé, une membrane imper-respirante.

12. Procédé de fabrication d'un article selon l'une quelconque des revendications 9 à 11 précédentes, **caractérisé en ce que** après l'application d'une ou plusieurs couches de la composition sur le moule on applique un film choisi parmi : un textile, un non-tissé, une membrane imper-respirante sur la composition.

13. Article résultant de l'application sur un moule d'au moins une couche d'une composition selon l'une quelconque des revendications 1 à 11, suivie d'un séchage.

14. Article selon la revendication 13, **caractérisé en ce qu'**il comporte un film imper-respirant obtenu selon le procédé suivant l'une quelconque des revendications 9 à 12 d'une épaisseur comprise entre 10 et 200µm.

15. Article selon la revendication 13 ou la revendication 14, **caractérisé en ce qu'**il comporte un film imper-respirant qui vérifie au moins l'une des propriétés suivantes :
- perméabilité à la vapeur mesurée suivant la norme ASTM E96 méthode B : supérieure ou égale à 300 g/m²/24h,
- résistance à la pénétration de l'eau mesurée suivant la norme ISO 811 supérieure ou égale à 8000Pa,
- contrainte-déformation en traction (norme ISO 37)
• allongement à la rupture : supérieure ou égale à 200%,
- déformation rémanente après allongement de 100%, mesurée suivant la norme ISO 2285, inférieure ou égale à 5%,
- résistance à la pénétration de l'eau (mesurée suivant la norme ISO 811) après pré-traitement par un test d'abrasion (suivant la norme EN530 Méthode 2) supérieure ou égale à 8000Pa (le test d'abrasion est réalisé avec un abrasif de grain 240 en appliquant 100 cycles et une pression sur l'éprouvette de 9+0,2kPa).

## Claims

1. Composition comprising:
(i) a dispersion of at least one elastomer in an aqueous solvent;
(ii) 15 to 100 % by weight, relative to the weight of the elastomer, of at least one hydrophilic compound selected from: cellulose and cellulose derivatives;
(iii) 2 to 50 % by weight, relative to the weight of the hydrophilic compound, of at least one cross-linking agent for the hydrophilic compound;
(iv) optionally a catalyst.

2. Composition comprising:
(i) a dispersion of at least one elastomer in an aqueous solvent;
(ii) 15 to 150 % by weight, relative to the weight of the elastomer, of at least one hydrophilic compound, partially or totally cross-linked, selected from: cellulose and cellulose derivatives.

3. Composition comprising:
(i) a solution of at least one elastomer in an organic solvent;
(ii) 15 to 150 % by weight, relative to the weight of the elastomer, of at least one hydrophilic compound, partially or totally cross-linked, selected from: cellulose and cellulose derivatives.

4. Composition as claimed in any one of claims 1 to 3, **characterised in that** the elastomer is selected from: natural rubbers, polyisoprenes obtained by synthesis, butadiene/ acrylonitrile copolymers, butadiene/ acrylonitrile/ methacrylic acid terpolymers, polychloroprenes, isoprene/ isobutylene copolymers, styrene/butadiene copolymers, which may or may not be carboxylated, polyurethanes, ethylene/ vinyl acetate copolymers, acrylics, fluorinated elastomers and thermoplastic elastomers, such as copolymers with styrene blocks, thermoplastic elastomers derived from polyolefins or thermoplastic polyurethanes.

5. Composition as claimed in any one of the preceding claims, **characterised in that** the hydrophilic compound is selected from: cellulose ethers and esters, fibres, or cellulose down or lint.

6. Composition as claimed in any one of the preceding claims, **characterised in that** the hydrophilic compound is selected from: carboxymethyl cellulose, (Na-CMC), carboxymethyl hydroxyethyl cellulose (Na-CMHEC), hydroxyethyl cellulose (HEC) hydroxypropyl cellulose (HPC), methyl cellulose (MC), methyl hydroxyethyl cellulose (MHEC), methyl hydroxypropyl cellulose (MHPC).

7. Composition as claimed in any one of the preceding claims, **characterised in that** the cross-linking agent for the hydrophilic compound is selected from: dimethylol dihydroxyethylene urea (DMDHEU), N-methylol acrylamide (NMA), melamine formaldehyde resins, urea formaldehyde resins, polyamine epichloroyhydrin resins (PAE), polycarboxylic acids, such as citric acid, polymaleic acid, polyacrylic acid, 1,2,3,4-butane tetracarboxylic acid, 1,2,3-propane tricarboxylic acid, a carboxylic acid polymer such as the polymers of acrylic acid, the polymers of maleic acid.

8. Composition as claimed in any one of the preceding claims, **characterised in that** the quantity of cross-linking agent for the hydrophilic compound, based on weight relative to the weight of the hydrophilic compound, is between 3 and 20 %, the quantity of hydrophilic compound by weight, relative to the weight of the elastomer, is between 15 and 50 %, even more advantageously between 15 and 40%, and the content of dry substance of the composition is between 15 and 75 % by weight.

9. Method of producing an article, **characterised in that** it comprises at least applying to a mould at least one layer of a composition as claimed in any one of claims 1 to 8, followed by drying.

10. Method of producing an article as claimed in claim 9, **characterised in that** the mould is in the shape of a hand and the article is a glove.

11. Method of producing an article as claimed in any one of preceding claims 9 to 10, **characterised in that**, prior to applying the composition, the mould is coated with a film selected from: a textile, a non-woven fabric, a waterproof-breathable membrane.

12. Method of producing an article as claimed in any one of preceding claims 9 to 11, **characterised in that**, after applying one or more layers of the composition to the mould, a film selected from a textile, a non-woven fabric, a waterproof-breathable membrane is applied to the composition.

13. Article obtained by applying to a mould at least one layer of a composition as claimed in any one of claims 1 to 11, followed by drying.

14. Article as claimed in claim 13, **characterised in that** it comprises a waterproof-breathable film produced by a method as claimed in any one of claims 9 to 12 with a thickness of between 10 and 200 µm.

15. Article as claimed in claim 13 or claim 14, **characterised in that** it comprises a waterproof breathable film which has at least one of the following properties:
- permeability to vapour measured in accordance with standard ASTM E96, method B: in excess of or equal to 300 g/m²/24h,
- resistance to penetration by water measured in accordance with standard ISO 811 in excess of or equal to 8000 Pa.
- tensile strength (standard ISO 37)
• elongation at break: in excess of or equal to 200 %,
- residual deformation after elongation by 100 %, measured in accordance with standard ISO 2285, less than or equal to 5 %,
- resistance to penetration by water (measured in accordance with standard ISO 811) after pre-treatment by an abrasion test (in accordance with standard EN530, method 2) in excess of or equal to 8000 Pa (the abrasion test is conducted using a 240 grain abrasive, applying 100 cycles and at a pressure of 9+0.2 kPa to the test tube).

## Patentansprüche

1. Zusammensetzung, umfassend:
(i) eine Dispersion wenigstens eines Elastomers in einem wässrigen Lösungsmittel;
(ii) 15 bis 100 Gew.-%, bezogen auf das Gewicht des Elastomers, wenigstens einer hydrophilen Verbindung ausgewählt aus: Cellulose und Cellulosederivaten;
(iii) 2 bis 50 Gew.-%, bezogen auf das Gewicht der hydrophilen Verbindung, wenigstens eines Vernetzungsmittels für die hydrophile Verbindung;
(iv) gegebenenfalls einen Katalysator.

2. Zusammensetzung, umfassend:
(i) eine Dispersion wenigstens eines Elastomers in einem wässrigen Lösungsmittel;
(ii) 15 bis 150 Gew.-%, bezogen auf das Gewicht des Elastomers, wenigstens einer hydrophilen Verbindung, die teilweise oder vollständig vorvernetzt ist, ausgewählt aus: Cellulose und Cellulosederivaten.

3. Zusammensetzung, umfassend:
(i) eine Lösung wenigstens eines Elastomers in einem organischen Lösungsmittel;
(ii) 15 bis 150 Gew.-%, bezogen auf das Gewicht des Elastomers, wenigstens einer hydrophilen Verbindung, die teilweise oder vollständig vorvernetzt ist, ausgewählt aus: Cellulose und Cellulosederivaten.

4. Zusammensetzung nach einem der Ansprüche 1 bis 3, **dadurch gekennzeichnet, dass** das Elastomer ausgewählt ist aus: Naturkautschuken, synthetischen Polyisoprenen, Butadien/Acrylnitril-Copolymeren, Butadien/Acrylnitril/Methacrylsäure-Terpolymeren, Polychloroprenen, Isopren/Isobutylen-Copolymeren, Copolymeren aus Styrol und carboxyliertem oder nichtcarboxyliertem Butadien, Polyurethanen, Ethylen/Vinylacetat-Copolymeren, Acrylen, fluorierten Elastomeren und thermoplastischen Elastomeren, wie Styrolblockcopolymeren, thermoplastischen Elastomeren, die von Polyolefinen abgeleitet sind, oder thermoplastischen Polyurethanen.

5. Zusammensetzung nach einem der vorherigen Ansprüche, **dadurch gekennzeichnet, dass** die hydrophile Verbindung ausgewählt ist aus: Celluloseethern und -estern, Cellulosefasern oder -vlies oder -flocken.

6. Zusammensetzung nach einem der vorherigen Ansprüche, **dadurch gekennzeichnet, dass** die hydrophile Verbindung ausgewählt ist aus: Carboxymethylcellulose (Na-CMC), Carboxymethylhydroxyethylcellulose (Na-CMHEC), Hydroxyethylcellulose (HEC), Hydroxypropylcellulose (HPC), Methylcellulose (MC), Methylhydroxyethylcellulose (MHEC), Methylhydroxypropylcellulose (MHPC).

7. Zusammensetzung nach einem der vorherigen Ansprüche, **dadurch gekennzeichnet, dass** der Vernetzer für die hydrophile Verbindung ausgewählt ist aus: Dimethyloldihydroxyethylenharnstoff (DMDHEU), N-Methylolacrylamid (NMA), Melamin-Formalin-Harzen, Harnstoff-Formalin-Harzen, Polyamin-Epichlorhydrin-(PAE)-Harzen, Polycarbonsäuren, wie Zitronensäure, Polymaleinsäure, Polyacrylsäure, 1,2,3,4-Butantetracarbonsäure, 1,2,3-Propantricarbonsäure, einem Carbonsäurepolymer, wie Acrylsäurepolymeren, Maleinsäurepolymeren.

8. Zusammensetzung nach einem der vorherigen Ansprüche, **dadurch gekennzeichnet, dass** die Gewichtsmenge des Vernetzers für die hydrophile Verbindung, bezogen auf das Gewicht der hydrophilen Verbindung, zwischen 3 und 20% ist, die Gewichtsmenge der hydrophilen Verbindung, bezogen auf das Gewicht des Elastomers, zwischen 15 und 50%, noch vorteilhafter zwischen 15 und 40% ist, und der Trockenmassegehalt der Zusammensetzung zwischen 15 und 75 Gew.-% ist.

9. Verfahren zur Herstellung eines Artikels, **dadurch gekennzeichnet, dass** es wenigstens das Aufbringen von wenigstens einer Schicht einer Zusammensetzung nach einem der Ansprüche 1 bis 8 auf eine Form, gefolgt von Trocknen, umfasst.

10. Verfahren zur Herstellung eines Artikels nach Anspruch 9, **dadurch gekennzeichnet, dass** die Form die Form einer Hand hat und der Artikel ein Handschuh ist.

11. Verfahren zur Herstellung eines Artikels nach einem der vorherigen Ansprüche 9 bis 10, **dadurch gekennzeichnet, dass** vor dem Aufbringen der Zusammensetzung die Form mit einem Film beschichtet wird, ausgewählt aus: einem Gewebe, einem Vlies, einer wasserdichten atmungsaktiven Membran.

12. Verfahren zur Herstellung eines Artikels nach einem der vorherigen Ansprüche 9 bis 11, **dadurch gekennzeichnet, dass** nach dem Aufbringen von einer oder mehreren Schichten der Zusammensetzung auf die Form ein Film auf die Zusammensetzung aufgebracht wird, ausgewählt aus: einem Gewebe, einem Vlies, einer wasserdichten atmungsaktiven Membran.

13. Artikel, erhalten durch Auftragen auf eine Form von wenigstens einer Schicht einer Zusammensetzung nach einem der Ansprüche 1 bis 11, gefolgt von Trocknen.

14. Artikel nach Anspruch 13, **dadurch gekennzeichnet, dass** er eine wasserdichte atmungsaktive Schicht umfasst, erhalten nach einem Verfahren gemäß einem der Ansprüche 9 bis 12 mit einer Dicke zwischen 10 und 200 µm.

15. Artikel nach Anspruch 13 oder Anspruch 14, **dadurch gekennzeichnet, dass** er einen wasserdichten atmungsaktiven Film umfasst, der wenigstens eine der folgenden Eigenschaften aufweist:
- die Dampfdurchlässigkeit, gemessen gemäß der Norm ASTM E96 Methode B, ist größer oder gleich 300 g/m²/24h,
- die Wasserdichtigkeit, gemessen gemäß der Norm ISO 811, ist größer oder gleich 8000 Pa,
- Verformung unter Zugspannung (Norm ISO 37)
• Bruchdehnung: größer oder gleich 200%,
• Verformungsrest nach Dehnung um 100%, gemessen gemäß der Norm ISO 2285, kleiner oder gleich 5%,
- Wasserdichtigkeit (gemessen gemäß der Norm ISO 811) nach Vorbehandlung mit einem Abrasionstest (gemäß der Norm EN530 Methode 2) größer oder gleich 8000 Pa (der Abrasionstest wird mittels eines Abrasivs der Korngröße 240 durchgeführt, wobei 100 Zyklen und ein Druck von 9+0,2 kPa auf den Probekörper angewandt werden).
